Europäisches Patentamt

(19) European Patent Office

Office européen des brevets

(11) Publication number: **0 121 253**

**A2**

(12) # EUROPEAN PATENT APPLICATION

(21) Application number: 84103538.9

(22) Date of filing: 30.03.84

(51) Int. Cl.³: **A 23 C 19/093**
**A 23 L 1/30, A 23 G 1/00**

(30) Priority: 30.03.83 US 480429

(43) Date of publication of application:
10.10.84 Bulletin 84/41

(84) Designated Contracting States:
AT BE CH DE FR GB IT LI LU NL SE

(71) Applicant: NABISCO BRANDS INC.
Nabisco Brands Plaza
Parsippany New Jersey 07054(US)

(72) Inventor: Rosa, Donna M.
1365 Shippan Avenue
Stamford Connect.(US)

(72) Inventor: Puglia, Wayne J.
22 Oak Point Drive West
Bayville New York(US)

(72) Inventor: Vink, Walter V.
Oak Ridge Road
Purdys New York(US)

(74) Representative: Brauns, Hans-Adolf, Dr. rer. nat. et al,
Hoffmann. Eitle & Partner, Patentanwälte
Arabellastrasse 4
D-8000 Munich 81(DE)

(54) Cheese flavored confection composition and process for its preparation.

(57) A cheese-flavored confectionary composition having a chocolate-like texture which includes powdered dry cheese, dry milk, and fat processed with the powdered dry cheese and, optionally, a dispersing agent and additional flavoring agent. Also enclosed is a process for preparing the cheese-flavored confectionary composition.

EP 0 121 253 A2

Croydon Printing Company Ltd.

Cheese flavored confection composition and
process for its preparation

The present invention relates to the art of confectionary compositions, and, in particular, to those compositions having a cheese flavor.

As a result of continuing efforts in the confectionary industry to provide the consumer with unique, attractive confectionary products, attention has been given to this development of snack-like cheese products. To this end several methods for making snack-sized cheese products have been developed. For example, such production methods are disclosed in U.S. Patent No. 3,761,284 and U.S. Patent No. 3,966,970 (corresponding to Japanese Patent Publication laid-open to the public under No. 155384 and claiming the convention priority thereof). The primary object of this prior art is to provide snack-sized cheese products having a cylindrical shape. In the U.S. Patent No. 3,761,284, a molten cheese is cooled to a temperature varying about 20° to 30°C. and formed into a rope and then cut into desired length to obtain snack-sized pieces. Thereafter, each piece is quickly cooled and wrapped. U.S. Patent No. 3,966,970 discloses a high-speed cutting of a quickly cooled cheese rope into individual pieces and a twist-wrapping thereof for improving the efficiency in manufacturing the snack-sized cheese products. Although these prior

- 2 -

art methods permit the provision of bite-sized pieces of a cheese product convenient to the consumer, the resultant shape of the product is inevitably limited to the shape obtained by the step of cutting the rope. Accordingly, the possible variations in the shape of the product according to the conventional arts are restricted to the varieties obtained by changing the sectional shape of the rope.

In order to overcome such shortcoming, U.S. Patent No. 4,299,855 to Wada, et al. shows a method of forming a snack-sized cheese products into a desirable rounded shape such as a sphere, ellipsoid, and/or a barrel shape by cooling a molten cheese to a temperature range of about 45°C. to 35°C.; heating a surface area of the cooled cheese to a temperature of about 52°C. to 39°C.; cutting the heated cheese into snack-sized pieces of cheese; and forming each of the snack-sized pieces by continuous rolling within a mold die for forming into a rounded shape without corners. By way of example, a cheese composition useful in the Wada, et al. process includes about 80% of Gouda cheese, 20% of Cheddar cheese, 2% of Hexametaphosphate, and 0.6% of neutralizer.

Other efforts in the area of cheese confections have been directed to providing compositions which have characteristics suitable for specific purposes. U.S. Patent No. 3,814,825 to Gilmartin Jr., et al. discloses a chunked synthetic cheese product produced by providing a heated, molten body of edible fat to which is added a

- 3 -

0121253

finely comminuted cheese-flavored dry material. The admixture is then cooled to a temperature below about 32°C (90°F) before chunking and dusting to prevent coagulation. According to Gilmartin, et al. the edible fat is a molten blend of hard and soft fats. The amount of fat useful to form the cheese product is within a range of 35-95 weight percent of the dry material (Col. 2, lines 3-5), and included within the preferred cheese material which can be used is spray-dried cheese material which, in turn, can include milk solids (Col. 2, lines 39-49). According to Gilmartin, et al. the edible fat is a molten blend of hard and soft fats, i.e., a hard fat characterized by a melting point between about 32°C and 60°C (90°F and 140°F).

In U.S. Patent No. 4,198,439 to Hoover a nut cheese product is shown which includes a homogeneous blend of 50 to 80 percent by weight of ground roasted nuts, 10 to 40 percent dehydrated cheese material, and 5 to 15 percent of a texture modifying agent comprising hydrogenated and non-hydrogenated fats, glycerides, and mixtures thereof. U.S. Patent No. 3,843,808 to Ziccarelli shows a shelf-stable dry cheese solids composition which includes finely dispersed fat particles, having a melting point of 32-51°C (90-124°F), enrobed in a fat enrobing agent such as codried dried yeast to prevent coalescing of the fat particles. U.S. Patent No. 2,279,202 to Musher describes a cheese composition which includes a grated hard cheese such as Parmesan, Parmesello, American, and Edam combined with a molten hard fat so that substantially all of the particles of the grated cheese are coated with the molten hard fat. Thereafter, the hard fat is allowed to congeal thereon. U.S. Patent No. 2,015,256 to Clickner discloses a dried cheese combined with a fat which is solid at room temperature which may be used as a coating.

Further disclosures, such as U.S. Patent No. 4,254,156 to DeSocio, et al., describe an imitation cheese base which simulates the consistency, feel and texture of a cheese cake filling prepared by mixing a cooled gelled custard, a solution of gelatin, a dry mix of starch and sugars and a vegetable oil-based imitation cheese to form a chilled slurry which is aerated to give the mass a cellular structure retained for an extended period of time. U.S. Patent No. 4,032,669 to Peters, et al. describes a cheese product in the form of chunks or crumble-like particles, i.e., "nuggets", which is made by combining a "natural" cheese constituent (i.e., not one which has been drastically altered by, for example, spray-drying), with two gelling additives, Xanthomonas colloids and locust bean gum, and casein or an edible caseinate salt. This mixture is then chilled to induce formation of a gel matrix, followed by comminuting the solid product, as required, to the desired particle size. Finally, U.S. Patent No. 1,735,510 to Shostak discloses a food product which is produced by mixing melted cheese and melted chocolate.

- 5 -

In none of the relevant disclosures known to date, however, there has been described a cheese confection composition capable of being formed as a confection unit or as a coating which composition has a smooth chocolate-like texture. It is therefore an object of the present invention to provide, among other things, such a composition which is useful as a confectionary.

In accordance with the present invention there is provided a shelf-stable cheese confection composition requiring no refrigeration having a smooth chocolate-like texture which is capable of forming a confectionary unit, coating, etc. The present cheese flavored composition includes as much as 20-40% by weight of a powdered dry cheese and dry milk in combination with a fat which softens at a temperature of between about (80°F. and 110°F.).In order to properly $\underline{\text{26 and 43°C}}$ effect the desired composition, the powdered dry cheese, preferably having no more than about 5% by weight of moisture, is blended with the dry milk after which the resulting blend is processed with the melted fat in order to break down the cheese particles while simultaneously forcibly coating the cheese particles with the fat. It is preferred to use a three- or five-roll mill for such processing and to include a dispersing agent such as lecithin to insure proper covering of the fat over the cheese particles. The overall content of moisture in the end product should not contain more than about 5% by weight of moisture.

Preferably the powdered dry cheese includes aged cheese solids and is present in an amount of between about 5 and 70% by weight, preferably from about 25 to about 45%. Included in the term powdered dry cheese are any powdered dry cheeses of various flavors, e.g., cheddar, cream-cheese, romano, blue, or dehydrated fat-containing food powder such as peanut powder.

The milk ingredient is a non-fat dry milk in an amount of from about 5 to about 70%, preferably also from about 25 to about 45%. The term dry milk includes but is not limited to non-fat dry milk, whole milk powder, buttermilk powder, dried creams, and nondairy substitutes such as caseinates, whey blends, soy protein, etc.

The fat is included in an amount of from about 25 to about 50% by weight, but preferably from about 20 to about 35% by weight. Examples of fats which can be used herein include but are not limited to those of animal, vegetable, or mineral origins which are solid at room temperature and have softening points consistent with desired organoleptic qualities, e.g., (80 to 110°F.) .If a [26 and 43°C] dispersing agent is used, it should be included in an amount of from about 0.2% to about 1.2% by weight, and preferably from about 0.3 to about 0.6% by weight.

Other flavor additives may also be included to enhance the product by giving an artificial or natural flavor or combinations thereof. Such additives include, but are limited to, bacon bits, jalapino flavoring, meat flavors such as smoked flavoring, vegetable flavoring, e.g., onion, garlic, spices, etc.

The resulting composition can then be deposited and allowed to set in the desired configuration, e.g., as a sheet, in a mold form, and/or as a coating which can be effected by methods such as enrobing, panning, etc. In order to achieve a particular flavor, additional materials such as, for example, bacon bits, etc. can be included in the composition.

As a result of the present composition and process, a shelf-stable cheese-flavored confection can be provided having a smooth texture that has a mouth feel and dissolution capability resembling chocolate and which requires no refrigeration. Such a composition is extremely valuable in the snack and confection industry in that it supplies a desirably flavored confection which is a sucrose-free substitute for chocolate, and other similarly textured products.

For a better understanding of the present invention, together with other and further objects, reference is made to the following description, and its scope will be pointed out in the appended claims.

A delicious highly-flavored cheese confection composition having a smooth chocolate-like texture can be prepared in accordance with the general formula found in TABLE I.

## TABLE I

| Component | Percent Range by Weight |
|---|---|
| Powdered Dry Cheese | 5-70% |
| Dry Milk | 5-70% |
| Fat which melts at from about 80°F. to about 110°F. | 15-50% |
| Dispersing Agent | 0-1.2% |
| Additional Flavoring Agent | 0-10% |

The composition set forth above is prepared by first blending the powdered dry cheese and dry milk. The fat is melted either with or without a dispersing agent and then processed in combination with the previously prepared blend. Such processing, which is readily achieved by use of mixer/blender (e.g., such as a Hobart type) or refined by use of a three- or five-roll mill, forcibly coats the fat onto the cheese particles, and in the case of refining simultaneously breaks down the cheese particles. In the alternative refining method a portion of the fat with a dispersing agent can be added after refining. It is important, however, to insure that the cheese powder and fat are processed together to form an essentially homogeneous fat-covered dry cheese/dry milk melt. Optionally, additional flavor components such as bacon bits can be included before depositing to produce the desired product.

0121253

## EXAMPLES

Specific compositions were prepared pursuant to the present invention according to the formula shown in TABLE II.

## TABLE II

| Component | Percent Range By Weight |
|---|---|
| Powdered Dry Cheese<br>Spray-dried, aged Cheddar<br>Cheese flavoring having a<br>maximum of about 5% Moisture<br>(For Example Borden's Cheddar<br>Cheese Flavoring Powder) | 25-45% |
| Non-fat Dry Milk | 25-45% |
| Fat-Solvent Fractionated<br>Lauric Butter (such as<br>those sold by Durkee) | 20-35% |
| Dispersing Agent-Lecithin | 0.3-0.6% |
| Additional Flavoring-<br>Bacon Bits | 7.0%-9.0% |

The powdered dry cheese and the nonfat dry milk were blended to form a dry mix. After the fat component was melted separately to temperature of about 140°F., lecithin was added and blended to insure proper dispersion of the fat over the cheese. The fat melt in liquid form was then added to the cheese, as well as bacon bits, and processed. On a pilot scale the processing was achieved by a blender/mixer, but it is believed that a five-roll mill refiner will work better on a large scale.

The melt blend was processed for a time of from about 3 to about 5 minutes at a temperature of from about 37°C (100°F) to about 58°C (135°F) to insure proper coating of the cheese particles, after which the composition was deposited in mold forms at a temperature of about 35°C (95°F) to 37°C (100°F). The resulting product was a firm attractive confectionary unit having a rich cheese flavoring which had a smooth chocolate-like organoleptic quality.

Upon preparing several experimental samples it was found that the following composition formed the most desirable and easily useable composition for the blending/mixing type processing.

## TABLE III

| Component | Percent by Weight |
|-----------|-------------------|
| Powdered Dry Cheese | 26.0% |
| Non-Fat Dry Milk | 26.0% |
| Fat Component | 39.0% |
| Dispersing Agent | 0.3% |
| Bacon Bits | 8.7% |
| Total | 100.0% |

Another cheese flavored composition was prepared in accordance with the formula in TABLE IV.

## TABLE IV

| Component | Percent by Weight |
|---|---|
| Powdered Dry Cheese | 34.8% |
| Non-fat Dry Milk | 34.8% |
| Fat Component | 30.0% |
| Dispersing Agent | 0.4% |
| | 100.0% |

The powdered dry cheese and non-fat dry milk were blended for a time of from about three to five minutes to form a dry mix. To the resulting dry mix a portion of the fat component, from about one-half to three-fourths and preferably about two-thirds, was added in a melted liquid state, at a temperature of about 60°C (140°F). The resulting admixture was processed by refining in a three-roll refiner to effect proper coating of the cheese particles with the fat components. This refined combination which is a flaked solid form, is introduced to a mixer/blender and heated to a temperature sufficient to convert the refined admixture to a molten state. The remaining portion of the fat component which had been previously melted and combined with the dispersing agent was then added to the melted admixture and blended together.

The composition formed by this latter process has been found to be particularly effective in a number of confectionary roles. For example, the cheese-flavored composition can be easily remelted and used for coating processes such as enrobing and panning. Thus, it may be conveniently applied to items such as nuts, wafers, crackers, dried fruits, dried meats, etc. The composition maintains its original consistency without degradation due to, e.g., separation of fat from solids.

Thus, while there have been described what are presently believed to be the preferred embodiments of the invention, those skilled in the art will realize that changes and modifications may be made thereto without departing from the spirit of the invention, and it is intended to claim all such changes and modifications as fall within the true scope of the invention.

## Claims

1. A cheese flavored confection composition having a chocolate-like texture and capable of forming a confectionary unit and coating comprising

a powdered dry cheese,

dry milk, and

fat which softens at a temperature of between about 26°C and 43 °C (80° and 110°F),

said powdered dry cheese and fat processed simultaneously to break down said cheese particles while forcibly coating said cheese particles with said fat.

2. The cheese flavored confection composition of Claim 1 which further comprises a dispersing agent.

3. The cheese flavored confection composition of Claim 1 wherein said powdered dry cheese comprises aged cheese solids and a maximum moisture content of about 5%.

4. The cheese flavored confection composition of Claim 1 wherein said dry milk is non-fat.

5. The cheese flavored confection composition of Claim 2 wherein said dispersing agent is lecithin.

6. The cheese flavored confection composition of Claim 1 wherein said powdered dry cheese is present in an amount of from about 5 to about 70% by weight, said dry milk is present in an amount of from about 5 to about 70% by weight; and said fat is present in an amount of from about 15 to about 50% by weight.

7.    The cheese-flavored confection composition of Claim 6 wherein said powdered dry cheese is present in an amount of from about 25 to about 45% by weight, said dry milk is present in an amount of from about 25 to about 45% by weight, and said fat is present in an amount of from about 20 to about 32% by weight.

8.    The cheese-flavored confection composition of Claim 2 wherein said dispersing agent is present in an amount of from about 0.3 to about 0.6% by weight.

10.    The cheese-flavored confection composition of Claim 1 wherein said powdered dry cheese and said fat are simultaneously processed in a three-roll refiner.

11.    A method for preparing a cheese-flavored confection composition comprising,

blending powdered dry cheese powder with a dry milk,

melting a fat which softens at a temperature of between about 26 and 43°C (80 and 110°F.),

processing said blend with said fat whereby the cheese particles of said powder are coated with said fat, and

allowing said processed combination to cool in the desired configuration.

12.    The method of Claim 11 wherein a dispersing agent is included in said fat during said melting step thereby facilitating said coating of said cheese particles.

13. The method of Claim 11 wherein processing is effected by blending/mixing.

14. The method of Claim 11 wherein said processing is effected by refining.

15. The method of Claim 11 wherein said processing is effected by refining a portion of said fat with said blend followed by blending/mixing the remaining fat with said refined product.

0121253

<u>Claims for Austria</u>

1. A method for preparing a cheese-flavored confection composition comprising,

blending powdered dry cheese powder with a dry milk,

melting a fat which softens at a temperature of between about 26 and 43°C (80 and 110°F.),

processing said blend with said fat whereby the cheese particles of said powder are coated with said fat, and

allowing said processed combination to cool in the desired configuration.

2. The method of Claim 1 wherein a dispersing agent is included in said fat during said melting step thereby facilitating said coating of said cheese particles.

3. The method of Claim 1 wherein processing is effected by blending/mixing.

4. The method of Claim 1 wherein said processing is effected by refining.

5. The method of Claim 1 wherein said processing is effected by refining a portion of said fat with said blend followed by blending/mixing the remaining fat with said refined product.